# EUROPÄISCHE PATENTSCHRIFT

(11) **EP 4 177 991 B1**
(45) Veröffentlichungstag und Bekanntmachung des Hinweises auf die Patenterteilung: **01.05.2024**
(21) Anmeldenummer: 21207287.0
(22) Anmeldetag: 09.11.2021
(51) Int. Cl.: H01M 8/0215, H01M 8/0213, H01M 8/04014, H01M 8/04082, H01M 8/04089, H01M 8/04223, H01M 8/04746, B29C 64/10, B33Y 80/00

(54) **BIPOLARPLATTE FÜR EINE BRENNSTOFFZELLE MIT INTEGRIERTER LEITERANORDNUNG ZUR ERZEUGUNG EINES GERICHTETEN ELEKTROMAGNETISCHEN FELDES**
BIPOLAR PLATE FOR A FUEL CELL HAVING AN INTEGRATED ELECTRICAL CONDUCTOR ARRANGEMENT FOR GENERATING A DIRECTED ELECTROMAGNETIC FIELD
PLAQUE BIPOLAIRE POUR UNE PILE À COMBUSTIBLE COMPRENANT UN ARRANGEMENT DE CONDUIT ÉLECTRIQUE INTÉGRÉ ET DESTINÉ À LA GÉNÉRATION D'UN CHAMP ÉLECTROMAGNÉTIQUE

(43) Veröffentlichungstag der Anmeldung: 10.05.2023
(73) Patentinhaber: Airbus Operations GmbH, 21129 Hamburg (DE)
(72) Erfinder: LINDE, Peter, 21129 Hamburg (DE); HEGENBART, Matthias, 21129 Hamburg (DE)

(56) Entgegenhaltungen:
- CN-A- 112 331 891
- JP-A- S6 191 876
- US-A- 5 817 221
- US-A1- 2004 018 400

## Beschreibung

### Technisches Gebiet

Die vorliegende Beschreibung betrifft Bipolarplatte für eine Brennstoffzelle zur Erzeugung von elektrischem Strom. Insbesondere betrifft die vorliegende Beschreibung eine Brennstoffzelle, einen Brennstoffzellenstapel, ein insbesondere additives Fertigungsverfahren zur Herstellung einer Bipolarplatte, ein Verfahren zum Betreiben einer Brennstoffzelle und ein Luftfahrzeug, aufweisend eine Brennstoffzelle.

### Technischer Hintergrund

Eine Brennstoffzelle, auch galvanische Zelle genannt, wandelt die chemische Reaktionsenergie eines kontinuierlich zugeführten Brennstoffes, in der Regel Wasserstoff als Reaktant, und eines Oxidationsmittels in elektrische Energie. Brennstoffzellen weisen hierfür Bipolarplatten als Elektrode mit eingefräster Gasströmungskanalstruktur zur definierten Leitung des Reaktanten auf. Die Strömung eines Reaktanten aus den Gaskanälen in eine Bipolarplatte ist abhängig von dem Druck im Gasströmungskanal, von der Querschnittsform des Gasströmungskanals und von der Fläche, die der Elektrode ausgesetzt ist. In verschiedenen Anwendungsfällen ist es wichtig die Leistung der Brennstoffzelle variieren zu können. Dabei kann beispielsweise der Gasfluss variiert werden, beispielsweise durch eine Variation des Drucks des Wasserstoffgases auf der Anodenseite. Alternativ oder zusätzlich kann auf der Kathodenseite die Luft in unterschiedlichem Maße durch reinen Sauerstoff ersetzt werden. Das schnelle Ansprechverhalten einer Brennstoffzelle ist beispielsweise für Luftfahrtanwendungen von großer Bedeutung, zum Beispiel bei einem notwendigen Neustart kurz vor dem Aufsetzen, und ist seit vielen Jahren Gegenstand der Forschung.

Es wäre wünschenswert, die oben genannten Möglichkeiten, die allesamt Maßnahmen außerhalb der Brennstoffzelle sind, durch zusätzliche Maßnahmen zur Steuerung der Leistung eines Brennstoffs zu ergänzen, und zwar durch Maßnahmen, die innerhalb der Brennstoffzelle angeordnet sind.

US 2004/018400A1, JP S6191876A, CN 112331891 A und US 5817221 A schlagen den Einsatz magnetischer oder elektromagnetischer Felder in Elektrodennähe einer Brennstoffzelle vor, um die Reaktionskinetik oder die Konzentration eines Reaktants lokal zu erhöhen.

### Beschreibung

Es kann als Aufgabe betrachtet werden, eine Brennstoffzelle bereit zu stellen, die die oben genanntes Verbesserungspotential liefert.

Diese Aufgabe wird gelöst durch die Gegenstände der unabhängigen Ansprüche. Weitere Ausführungsformen ergeben sich aus den abhängigen Ansprüchen sowie aus der folgenden Beschreibung.

Gemäß einem ersten Aspekt ist eine Bipolarplatte für eine Brennstoffzelle zur Erzeugung von elektrischem Strom angegeben. Die Bipolarplatte weist einen Bipolarplattenkörper mit einer ersten Oberfläche auf, wobei der Bipolarplattenkörper eingerichtet ist, über die erste Oberfläche mit einer Elektrode in Kontakt zu stehen. Der Bipolarplattenkörper weist auf der ersten Oberfläche mindestens einen Gasströmungskanal auf, wobei der Gasströmungskanal eine erste Gasströmungskanalseitenwand und eine gegenüberliegende zweite Gasströmungskanalseitenwand definiert. Der Gasströmungskanal verläuft entlang einer ersten Richtung und ist dafür vorgesehen, die Elektrode dem Reaktanten auszusetzen. Ferner weist die Bipolarplatte mindestens einen elektrischen Leiter auf, wobei der mindestens eine elektrische Leiter eingerichtet ist, innerhalb des Bipolarplattenkörpers hinter der ersten Gasströmungskanalseitenwand und/oder der zweiten Gasströmungskanalseitenwand zumindest teilweise parallel zu der ersten Richtung zu verlaufen, derart, dass sich bei einer an den elektrischen Leiter angelegten Spannung der elektrische Leiter ein elektromagnetisches Feld ausbildet, wobei das elektromagnetisches Feld dafür vorgesehen ist, den Reaktant zumindest teilweise in Richtung der Elektrode zu beschleunigen.

Das elektromagnetische Feld kann dabei durch die Beschleunigung des Reaktanten die schnelle Kontrolle der Leistung der Brennstoffzelle verbessern. Ferner wirkt das elektromagnetische Feld direkt, da es sich direkt im Gasströmungskanal befindet. Zusätzlich kann das elektromagnetische Feld helfen, eine zeitlich begrenzte Spitzenleistung der Brennstoffzelle zu erzeugen, was z.B. in kritischen Situationen von Vorteil ist.

Für den Aufbau einer Brennstoffzelle sind die wichtigsten Komponenten die Bipolarplatten und die Membran-Elektroden-Einheit. Sie sind multifunktionale Komponenten, die verantwortlich sind für die gleichmäßige Verteilung der Reaktionsgase (H₂ und 0₂) über die Elektroden über Strömungskanäle beziehungsweise Gaskanäle, die Ableitung der Wärme und der Reaktionsprodukte in Form von Wasser aus der Zellanordnung, die elektrische Verbindung der Kathode einer Zelle mit der Anode der benachbarten Zelle, und die strukturelle Unterstützung der dünnen und mechanisch schwachen Membran-Elektroden-Einheit. Daher sollte ein ideales Material für Bipolarplatten hohe elektrische Leitfähigkeit, geringe Gasdurchlässigkeit, hohe Korrosionsbeständigkeit in sauren Umgebungen, hohe mechanische Festigkeit und geringe Kosten aufweisen. Zum Stand der Technik gehören hierbei Bipolarplatten aus hochdichtem Graphit, der chemisch stabil ist, eine hohe Korrosionsbeständigkeit und eine hohe thermische/elektrische Leitfähigkeit aufweist. Allerdings sind die Graphitplatten spröde, weisen eine geringe mechanische Festigkeit auf und verursachen hohe Herstellungskosten, da die Strömungsfeldkanäle gefräst werden müssen. Dementsprechend wurden mehrere Studien durchgeführt, um geeignetere und kostengünstigere Materialien für die Herstellung von Bipolarplatten zu entwickeln, zum Beispiel Metalle und Verbundwerkstoffe. Die Verwendung metallischer Werkstoffe ermöglicht zudem die Anwendung anderer Fertigungstechniken wie Stanzen, Hydroforming, Gummipadformen, Mikro-Elektroerosion, elektrochemische Mikrobearbeitung und additive Fertigung.

Werden nun in die Bipolarplatte elektrische Leiter eingebracht, so kann durch das Anlegen eines elektrischen Stroms an den elektrischen Leiter ein Magnetfeld induziert werden.

Dabei ist es bekannt, dass Magnetfelder einen Einfluss auf sich bewegende Gasteilchen haben. Bewegt sich ein Gasteilchen X mit der Masse m mit der Geschwindigkeit v durch den Raum und gerät in ein Magnetfeld mit der Stärke und Richtung M, so nimmt das Gasteilchen eine veränderte Richtung ein und wird mit der Beschleunigung a beschleunigt. Dieses Prinzip beschleunigt den Reaktanten und kann somit eine auf die Elektrodenoberfläche gerichtete Kraft ausüben. Die Menge der der chemischen Reaktion zur Verfügungen stehenden Reaktanten wird somit erhöht.

Gemäß einer Ausführungsform ist der mindestens eine elektrische Leiter eine Vielzahl von elektrischen Leitern. Die Vielzahl von elektrischen Leitern kann dabei parallel verlaufen und an eine gemeinsame Stromquelle angeschlossen sein. Die Stromquelle kann dabei unabhängig von der Brennstoffzelle sein, oder, zumindest teilweise über von der Brennstoffzelle generierten elektrischen Strom gespeist werden.

Gemäß einer weiteren Ausführungsform weist der mindestens eine elektrische Leiter ein Metall auf, insbesondere Kupfer, Gold, oder ein ähnlich leitfähiges Metall.

Gemäß einer weiteren Ausführungsform weist der mindestens eine elektrische Leiter eine graphenbeschichtete Kohlefaser auf. Kohlenstofffasern sind elektrisch und thermisch gut leitfähig, die Elektronegativität EN hat mit 2,50 einen relativ hohen Wert.

Gemäß einer weiteren Ausführungsform weist der mindestens eine elektrische Leiter einen Hochtemperatur-Supraleiter auf. Hochtemperatur-Supraleiter sind Materialien, deren Supraleitfähigkeit, anders als bei konventionellen Supraleitern, nicht durch die Elektron-Phonon-Wechselwirkung zustande kommt. Meistens handelt es sich nicht wie gewohnt um metallische, sondern um keramische Materialien. Generell sind Supraleiter Materialien, deren elektrischer Widerstand beim Unterschreiten der sogenannten Sprungtemperatur abrupt gegen null strebt beziehungsweise unmessbar klein wird, kleiner als 1 · 10⁻²⁰ Ω.

Gemäß einer weiteren Ausführungsform weist der Bipolarplattenkörper eine Keramik auf. Als Keramik wird eine Vielzahl anorganischer nichtmetallischer Werkstoffe bezeichnet, die grob in die Typen Irdengut, Steingut, Steinzeug, Porzellan und Sondermassen unterteilt werden können

Gemäß einer weiteren Ausführungsform weist der Bipolarplattenkörper einen kohlefaserverstärkten Kunststoff auf. Kohlefaserverstärkter Kunststoff ist ein Verbundwerkstoff, bei dem Kohlenstofffasern in eine Kunststoff-Matrix eingebettet sind. Die Matrix dient zur Verbindung der Fasern sowie zum Füllen der Zwischenräume. Meist wird als Matrix der Werkstoff Epoxidharz gewählt. Es sind aber auch andere Duroplaste oder auch Thermoplaste als Matrixwerkstoff möglich.

Gemäß einer weiteren Ausführungsform weist der Bipolarplattenkörper einen kohlefaserverstärkten Kohlenstoff auf. Kohlefaserverstärkte Kohlenstoffe sind Verbundwerkstoffe, die vollständig aus Kohlenstoff bestehen. Kohlefaserverstärkter Kohlenstoff besteht aus Kohlenstofffasern von ca. 5-10 µm Durchmesser, die in einer Matrix aus reinem Kohlenstoff eingebettet sind. Sie verleihen dem Werkstoff seine hohe mechanische Stabilität. Die Matrix aus Kohlenstoff nimmt dabei von außen wirkende Kräfte auf und verteilt sie im Gefüge.

Gemäß einem weiteren Aspekt ist eine Brennstoffzelle, aufweisend eine oben beschriebene Bipolarplatte angegeben. Die Brennstoffzelle weist ferner eine Steuereinheit auf. Die Steuereinheit ist dafür vorgesehen, den mindestens einen elektrischen Leiter anzusteuern. Durch das Ansteuern können definiert Magnetfelder, insbesondere auch an verschiedenen Stellen der Bipolarplatte, oder an verschiedenen Stellen innerhalb eines Brennstoffzellenstapels induziert werden. Somit können verschiedene Anwendungsfälle abgebildet werden. Die Steuereinheit kann dabei Teil eines Regelsystems sein. Hierbei wird das Magnetfeld in Reaktion auf eine Variation verschiedener Eingangsgrößen eingestellt.

Gemäß einer Ausführungsform ist die die Brennstoffzelle eingerichtet über eine erste Gasleitung mit einem kryogenem Wasserstoff enthaltenden Tank verbindbar zu sein. Kryogen in diesem Zusammenhang ist ein Begriff für Stoffe, Prozesse und Eigenschaften im Zusammenhang mit extrem niedrigen Temperaturen. Der mindestens eine elektrische Leiter ist ein Hochtemperatur-Supraleiter. Die Brennstoffzelle ist eingerichtet, mit der ersten Gasleitung derart in thermischer Wechselwirkung zu stehen, so dass eine durch den kryogenen Wasserstoff induzierte Wärmesenke in der ersten Gasleitung den Hochtemperatur-Supraleiter kühlt, und die Brennstoffzelle den kryogenen Wasserstoff durch Aussetzen der ersten Gasleitung an die durch den Betrieb der Brennstoffzelle entstehende Abwärme erwärmt. Thermische Wechselwirkung bedeutet in diesem Zusammenhang, dass ein Temperaturgradienten von der Brennstoffzelle zu dem kryogenen Wasserstoff in der ersten Gasleitung vorherrscht. Hierfür kann die erste Gasleitung durch den Bipolarplattenkörper geführt sein.

Gemäß einem weiteren Aspekt ist ein Brennstoffzellenstapel angegeben, aufweisend eine Mehrzahl der oben beschriebenen Brennstoffzellen. Ein Brennstoffzellenstapel bezeichnet hierbei einen Komplex bestehend aus einer oder mehreren aufeinander gestapelten und in einer elektrischen Serienschaltung angeordneten, planaren Einzelzellen. Der Stapelaufbau wird an beiden Enden durch sogenannte Stromabnehmerplatten zur Abnahme des elektrischen Stroms versehen und durch eine - meist plattenförmige - und zum Stapelaufbau gehörende Isolierung elektrisch von den sogenannten Endplatten getrennt. Die Endplatten sind an beiden Enden des Stapelaufbaus angeordnet und meist durch Zuganker miteinander verbunden. Eine Protonenaustauschmembran-Brennstoffzelle ist ein Stapel elektrochemischer Zellsysteme, die in Reihe geschaltet sind. Da die Elektronen von der Anode einer Zelle zur Kathode der nächsten Zelle wandern müssen, ist die elektrische Leitfähigkeit durch die Platte eine wichtige Voraussetzung. Eine weitere wichtige Anforderung ist die geringe Durchlässigkeit für die reagierenden Gase oder für Ionen. Die Bipolarplatten sollten über einen längeren Zeitraum chemisch inert bleiben. Die Bipolarplatten sollten außerdem leicht sein und sich mit Hilfe von Massenproduktionstechnologien hergestellt werden.

Gemäß einem weiteren Aspekt ist ein Verfahren, insbesondere ein additives Fertigungsverfahren, zur Herstellung einer oben beschriebenen Bipolarplatte angegeben. Das Verfahren weist die folgenden Schritte auf. Zu Beginn wird ein elektrischer Leiter und ein thermoplastischer Isolationswerkstoff bereitgestellt. Der elektrische Leiter wird mit dem thermoplastischen Isolationswerkstoff über einen Druckkopf, der dafür vorgesehen ist, ein koaxiales Kabel herzustellen, ummantelt. Das koaxiale Kabel wird zu einem Bipolarplattenkörper abgelegt, wobei der Bipolarplattenkörper auf der ersten Oberfläche mindestens einen Gasströmungskanal aufweist. Wird nun an den elektrischen Leiter eine Spannung angelegten, bildet der elektrische Leiter ein elektromagnetisches Feld aus, wobei das elektromagnetisches Feld dafür vorgesehen ist, einen Reaktant zumindest teilweise in Richtung einer mit dem Bipolarplatte in Kontakt stehenden Elektrode zu beschleunigen.

Gemäß einer Ausführungsform umfasst der elektrische Leiter eine Vielzahl von elektrischen Leitern. Die Vielzahl von elektrischen Leitern kann dabei hinter der ersten Gasströmungskanalseitenwand und/oder der zweiten Gasströmungskanalseitenwand zumindest teilweise parallel zu der ersten Richtung zu verlaufen. Die Vielzahl der elektrischen Leiter kann dabei aus dem gleichen oder verschiedenen Materialien hergestellt sein.

Gemäß einem weiteren Aspekt ist ein Verfahren zum Betreiben einer oben beschriebenen Brennstoffzelle angegeben, wobei das Verfahren die folgenden Schritte aufweist. Es ist eine Verbindung der Brennstoffzelle mit einem kryogenem Wasserstoff enthaltenden Tank über eine erste Gasleitung vorgesehen. Der kryogene Wasserstoff wird durch Aussetzen der ersten Gasleitung an die durch den Betrieb der Brennstoffzelle entstehende Abwärme erwärmt, während der Hochtemperatur-Supraleiter über eine durch den kryogenen Wasserstoff induzierte Wärmesenke gekühlt wird. Wird nun an den Hochtemperatur-Supraleiter eine Spannung angelegt, bildet der Hochtemperatur-Supraleiter ein elektromagnetisches Feld ausbildet, wobei das elektromagnetisches Feld dafür vorgesehen ist, den Reaktant zumindest teilweise in Richtung der Elektrode zu beschleunigen.

Gemäß einem weiteren Aspekt ist ein Luftfahrzeug, aufweisend eine oben beschriebene Brennstoffzelle angegeben. Unter einem Luftfahrzeug ist dabei beispielsweise ein Passagierflugzeug, ein Helikopter, eine Drohne, ein Luftschiff oder ein Segelflugzeug zu verstehen.

Das Einsatzgebiet der Brennstoffzelle kann auch auf Landfahrzeuge oder den stationären Maschinenbau erweitert werden.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung des prinzipiellen Aufbaus einer Brennstoffzelle gemäß dem Stand der Technik.
- Fig. 2: eine schematische Darstellung des Einflusses eines Magnetfelds auf ein Gasteilchen.
- Fig. 3: eine schematische Darstellung eines einen elektrischen Leiter umgebenden Magnetfelds.
- Fig. 4: eine schematische Darstellung einer Bipolarplatte für eine Brennstoffzelle zur Erzeugung von elektrischem Strom mit einem elektrischen Leiter.
- Fig. 5: eine schematische Darstellung einer Bipolarplatte nach Fig. 4 mit einer Elektrode und einer Mehrzahl von elektrischen Leitern.
- Fig. 6: eine schematische Darstellung eines Brennstoffzellenstapels.
- Fig. 7: eine schematische Darstellung einer Vorrichtung zur Herstellung einer Bipolarplatte.
- Fig. 8: eine schematische Darstellung eines additiven Herstellungsverfahrens einer Bipolarplatte.
- Fig. 9: eine schematische Darstellung eines Verfahrens zum Betreiben einer Brennstoffzelle.
- Fig. 10: eine schematische Darstellung eines Luftfahrzeugs mit einer Brennstoffzelle.

### Detaillierte Beschreibung von Ausführungsbeispielen

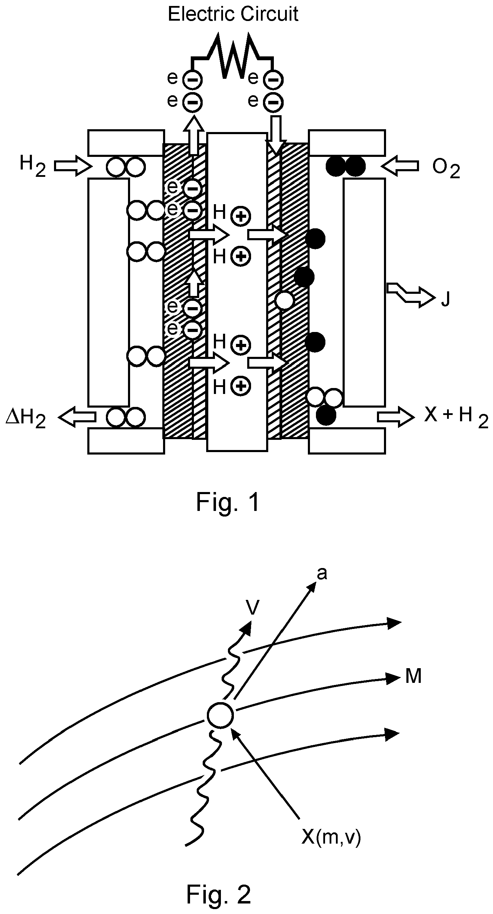

Fig. 1 zeigt eine schematische Darstellung des prinzipiellen Aufbaus einer Brennstoffzelle gemäß dem Stand der Technik. Brennstoffzellen sind eine der vielversprechendsten Quellen umweltfreundlicher Energie für die Zukunft. Diese Systeme erzeugen elektrische Energie, indem sie die in einem Brennstoff, zum Beispiel Wasserstoff oder Methanol, gespeicherte chemische Energie durch Oxidations-Reduktionsreaktionen umwandeln. Das Prinzip der Brennstoffzelle basiert auf der Reaktionsgleichung 2 H₂ + O₂ = 2 H₂O. Der Brennstoffzelle wird dabei H₂ zugeführt, links, welcher eine Anode umströmt und teilweise wieder als ΔH₂ austritt. Die Wasserstoffmoleküle des H₂ zerfallen dabei zu geladenen Wasserstoffatomen, Wasserstoff-Ionen H⁺, und geben ein freies Elektron e⁻ ab. Die freien Elektronen e⁻ fließen als nutzbarer Strom über einen Leiter zur Kathode. Dort bilden sie mit den Sauerstoffatomen negative Sauerstoff-Ionen O²⁻. Die Wasserstoff-Ionen H⁺ wandern durch den Elektrolyten zur Kathode, wo sie sich mit den Sauerstoff-Ionen zu Wasser H₂O vereinigen und dabei noch Wärme J freisetzen.

Fig. 2 eine schematische Darstellung des Einflusses eines Magnetfelds auf ein Gasteilchen. Es ist bekannt, dass Magnetfelder einen Einfluss auf sich bewegende Gasteilchen haben. Bewegt sich ein Gasteilchen X mit der Masse m mit der Geschwindigkeit v durch den Raum und gerät in ein Magnetfeld mit der Stärke und Richtung M, so nimmt das Gasteilchen eine veränderte Richtung ein und wird mit der Beschleunigung a beschleunigt. Dieses Prinzip beschleunigt den Reaktanten und übt somit eine auf die Elektrodenoberfläche gerichtete Kraft aus.

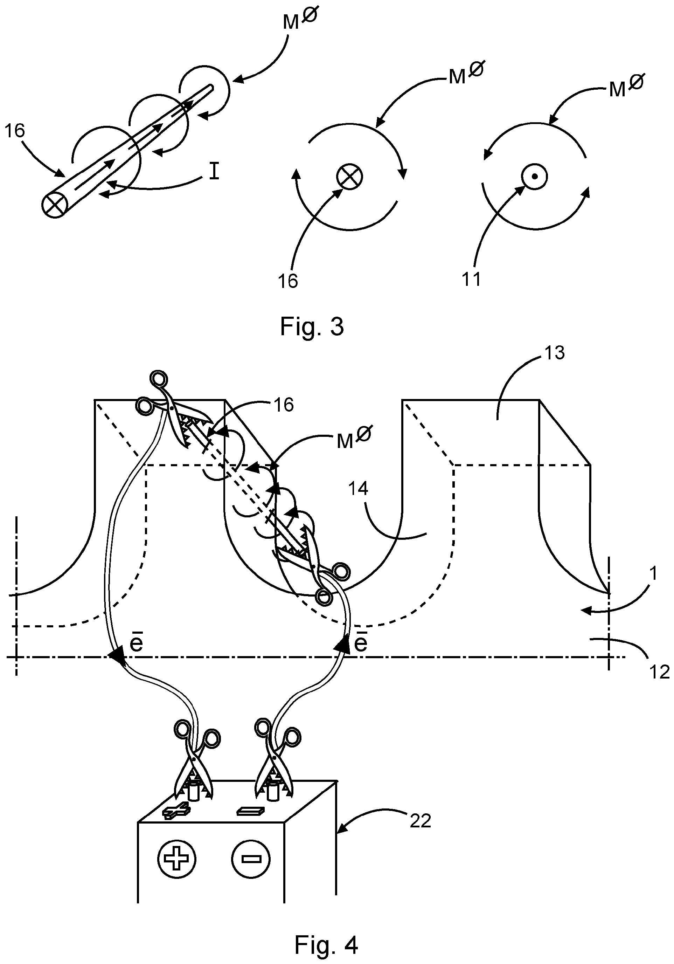

Fig. 3 zeigt einen elektrischen Draht, durch den ein elektrischer Strom fließt. In Flussrichtung gesehen, bildet sich um den Draht ein elektromagnetisches Feld. Die Regel der "Rechtsschraube" besagt, dass sich das elektromagnetische Feld in Flussrichtung gesehen kreisförmig und im Uhrzeigersinn um den Draht ausbildet.

Es wird somit zusätzlich zum Gasströmungsdruck ein elektromagnetischer Einfluss auf die Reaktanten in den Strömungskanälen in der Bipolarplatte ausgeübt wird, um die Strömung zu den Elektroden zu verbessern.

Fig. 4 ist ein Detail einer Bipolarplatte 10 mit einem Gasströmungskanal 14 in dem Bipolarplattenkörper 12 mit einer ersten Oberfläche 13 dargestellt. In der ersten Gasströmungskanalseitenwand des Gasströmungskanals 14 ist ein elektrischer Leiter 16 eingebettet. Dieser Leiter kann durch additive Fertigung der Bipolarplatte 12 mit einem koaxialen Druckkopf in seine Position gebracht werden. Der elektrische Leiter 12 verläuft dabei parallel zu einem Gasströmungskanal, wobei über eine Stromquelle 22 elektrischer Strom und ein elektromagnetisches Feld M^{Ø} im Gasströmungskanal 14 wirken. Über das Prinzip der Rechtsschraube werden sich im Gasströmungskanal 14 befindliche Reaktanten nun in Richtung der ersten Oberfläche 13 beschleunigt.

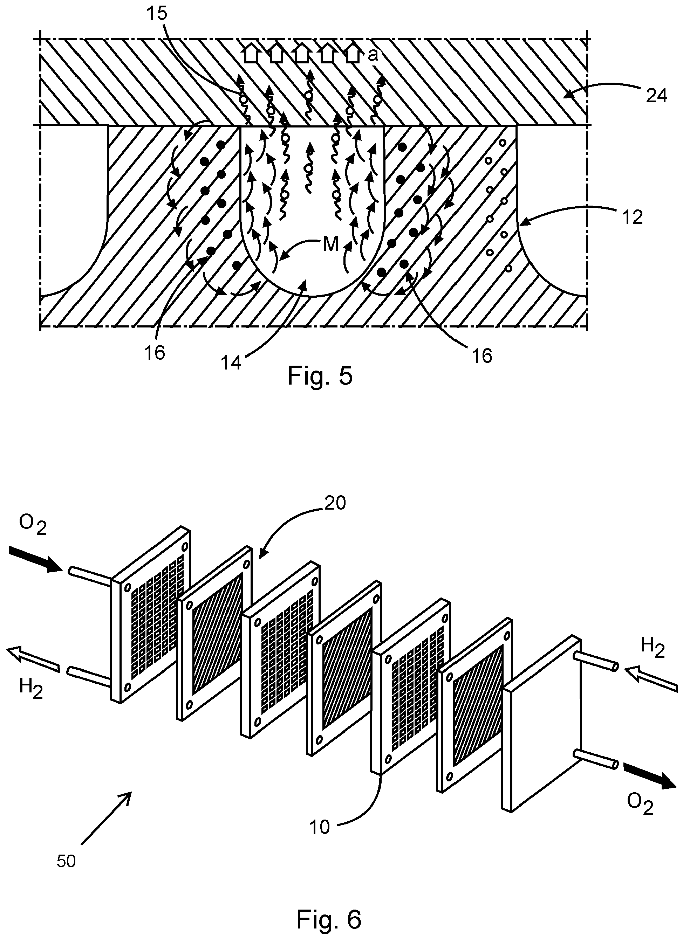

Fig. 5 zeigt das gleiche Detail einer Bipolarplatte 10 mit Gasströmungskanal 14. Nun sind mehrere elektrische Leiter 16 in den Kanalseitenwänden der Bipolarplatte 10 entlang des Gasströmungskanals 14 in mehreren Reihen angeordnet und bilden ein "Band" von elektrischen Leitern 16. Wenn elektrischer Strom durch diese elektrische Leiter 16 fließt, bilden sich mehrere elektromagnetische Felder, eines um jeden elektrischen Leiter 16. Auf jeder Seite des "Bands" bildet sich ein elektromagnetisches Feld, das parallel zum "Band" ausgerichtet ist. Reaktanten 15, die sich im Gasströmungskanal 14 bewegen, werden durch das elektromagnetische Feld beeinflusst und beschleunigt. Wenn die elektrischen Leiter 16 im richtigen Winkel ausgerichtet sind und elektrischer Strom in der richtigen Richtung durch sie fließt, können die Reaktanten 15 zur Elektrode 24 hin beschleunigt werden.

Fig. 6 zeigt eine schematische Darstellung eines Brennstoffzellenstapel 50. Da die maximal erzielbare Zellenspannung einer Einzelzelle physikalisch begrenzt ist und im Anwendungsfall regelmäßig unter 1V, typischerweise im Bereich 0,5 bis 0,7V liegt, werden zur Herstellung höherer Spannungen und Leistungen mehrere Einzelzellen in Form einer elektrischen Serienschaltung zusammengeschaltet. Dieser im folgenden als Stapelaufbau bezeichnete Komplex besteht aus einer oder mehreren aufeinander gestapelten und in einer elektrischen Serienschaltung angeordneten, planaren Einzelzellen. Der Stapelaufbau wird an beiden Enden durch sogenannte Stromabnehmerplatten zur Abnahme des elektrischen Stroms versehen und durch eine - meist plattenförmige - und zum Stapelaufbau gehörende Isolierung elektrisch von den sogenannten Endplatten getrennt. Die Endplatten sind an beiden Enden des Stapelaufbaus angeordnet und meist durch Zuganker miteinander verbunden. Durch diese Zuganker ist die Aufbringung einer Verspannungskraft bzw. einer Druckkraft auf den Stapelaufbau möglich.

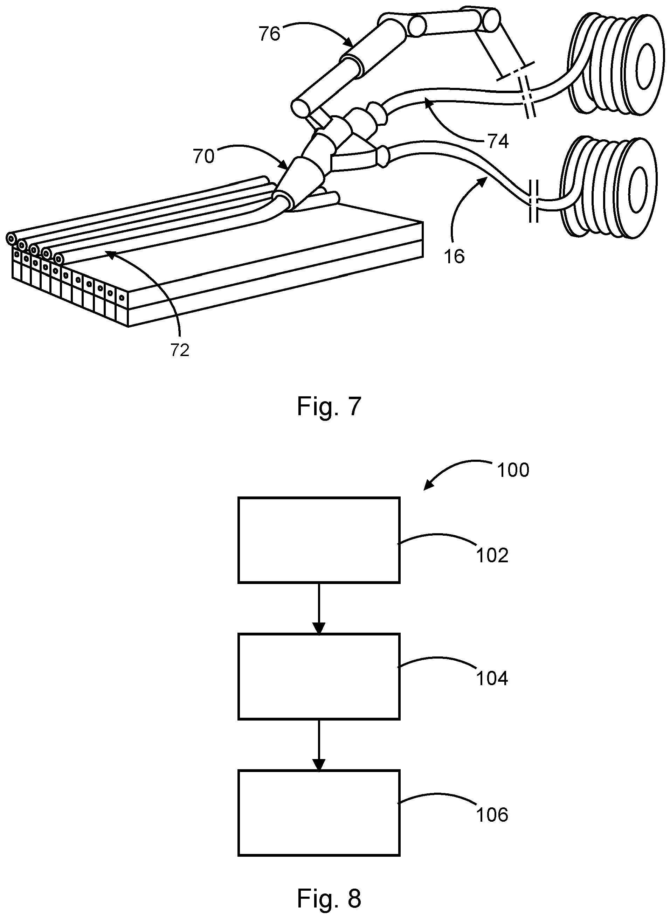

Fig. 7 zeigt eine schematische Darstellung einer Vorrichtung zur Herstellung einer Bipolarplatte. Über einen koaxialen Druckkopf 70 wird aus einem elektrischen Leiter 16 und einem thermoplastischen Filament 74 ein koaxiales Filament 72 gebildet. Ein Roboterarm 76 ist eingerichtet die einzelnen Filamente nebeneinander abzulegen und somit den Bipolarplattenkörper 12 aufzubauen.

Der elektrische Leiter 16 kann dabei als Endlosfaser vorliegen und aus einer oder mehreren Kohlenstofffasern oder aus einem elektrischen Metalldraht bestehen.

Fig. 8 zeigt eine schematische Darstellung eines additiven Herstellungsverfahrens einer Bipolarplatte. Das Verfahren 100 weist die folgenden Schritte auf. Zu Beginn wird ein elektrischer Leiter 16 und ein thermoplastischer Isolationswerkstoff 74 bereitgestellt. Der elektrische Leiter 16 wird mit dem thermoplastischen Isolationswerkstoff über einen Druckkopf, der dafür vorgesehen ist, ein koaxiales Kabel herzustellen, ummantelt. Das koaxiale Kabel 72 wird zu einem Bipolarplattenkörper 12 abgelegt, wobei der Bipolarplattenkörper 12 auf der ersten Oberfläche 13 mindestens einen Gasströmungskanal 14 aufweist. Wird nun an den elektrischen Leiter 16 eine Spannung angelegten, bildet der elektrische Leiter 16 ein elektromagnetisches Feld aus, wobei das elektromagnetisches Feld dafür vorgesehen ist, einen Reaktant 15 zumindest teilweise in Richtung einer mit dem Bipolarplatte 10 in Kontakt stehenden Elektrode zu beschleunigen.

Das Verfahren 100 wird vorzugsweise unter Einsatz einer in Fig. 7 beschriebenen Vorrichtung durchgeführt, wobei der elektrische Leiter 16 eine Vielzahl von elektrischen Leitern umfasst.

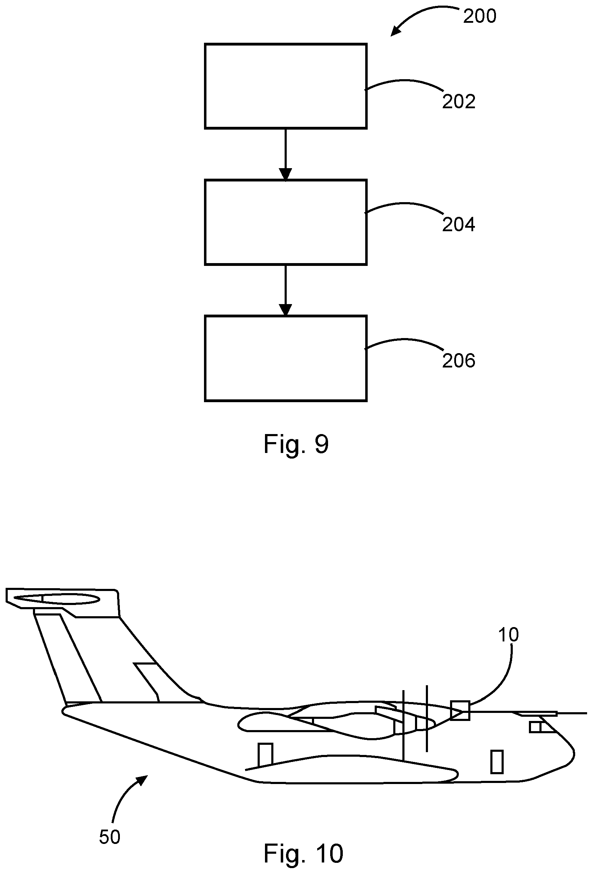

Fig. 9 zeigt eine schematische Darstellung eines Verfahrens 200 zum Betreiben einer Brennstoffzelle, wobei das Verfahren die folgenden Schritte aufweist. Es ist eine Verbindung der Brennstoffzelle 10 mit einem kryogenem Wasserstoff enthaltenden Tank über eine erste Gasleitung vorgesehen 202. Der kryogene Wasserstoff wird durch Aussetzen der ersten Gasleitung an die durch den Betrieb der Brennstoffzelle 10 entstehende Abwärme erwärmt 204 während der Hochtemperatur-Supraleiter über eine durch den kryogenen Wasserstoff induzierte Wärmesenke gekühlt wird. Wird nun an den Hochtemperatur-Supraleiter eine Spannung angelegt, bildet der Hochtemperatur-Supraleiter ein elektromagnetisches Feld ausbildet, wobei das elektromagnetisches Feld dafür vorgesehen ist, den Reaktant zumindest teilweise in Richtung der Elektrode zu beschleunigen.

Das Verfahren 200 liefert somit mehrere Vorteile. Der kryogene Wasserstoff wird über die Wärme der Brennstoffzelle 10 erwärmt, wodurch die notwendige zuzuführende Energie zum Aufwärmen des kryogenen Wasserstoffs reduziert werden kann. Gleichzeitig wird über die, durch den kryogenen Wasserstoff induzierte, Wärmesenke die Temperatur des Supraleiters vorteilhaft herabgesetzt.

Fig. 10 eine schematische Darstellung eines Luftfahrzeugs mit einer Brennstoffzelle. Unter einem Luftfahrzeug kann dabei ein Passagierflugzeug, ein Helikopter, eine Drohne, ein Luftschiff oder ein Segelflugzeug zu verstehen sein.

Die optimale Lage und Anzahl der elektrischen Leitungen muss durch Berechnungen und anschließende Tests ermittelt werden. Die elektrischen Leitungen können mit einer Steuereinheit verbunden werden, die den Betrieb der Brennstoffzelle steuert, einschließlich Gasdruck, benötigte Leistung der Flugsteuerung usw.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Bipolarplatte
- 12: Bipolarplattenkörper
- 13: erste Oberfläche
- 14: Gasströmungskanal
- 15: Reaktant
- 16: elektrischer Leiter
- 20: Membran
- 22: Stromquelle
- 24: Elektrode
- 50: Brennstoffzellenstapel
- 70: Koaxialer Druckkopf
- 72: Koaxiales Filament
- 74: Thermoplastisches Filament
- 76: Roboterarm
- 100: Fertigungsverfahren
- 102: Bereitstellen
- 104: Ablegen
- 200: Verfahren zum Betreiben
- 202: Vorsehen
- 204: Erwärmen
- 300: Luftfahrzeug

## Patentansprüche

1. Bipolarplatte (10) für eine Brennstoffzelle zur Erzeugung von elektrischem Strom, aufweisend:
einen Bipolarplattenkörper (12) mit einer ersten Oberfläche (13), wobei der Bipolarplattenkörper (12) eingerichtet ist über die erste Oberfläche (13) mit einer Elektrode in Kontakt zu stehen,
wobei der Bipolarplattenkörper (12) auf der ersten Oberfläche (13) mindestens einen Gasströmungskanal (14) aufweist,
wobei der Gasströmungskanal (14) eine erste Gasströmungskanalseitenwand und eine gegenüberliegende zweite Gasströmungskanalseitenwand definiert, und
wobei der Gasströmungskanal (14) entlang einer ersten Richtung verläuft und dafür vorgesehen ist, einen Reaktanten (15) mit der Elektrode in Kontakt zu bringen, und
mindestens einen elektrischen Leiter (16),
wobei der mindestens eine elektrische Leiter (16) eingerichtet ist, innerhalb des Bipolarplattenkörpers (12) hinter der ersten Gasströmungskanalseitenwand und/oder der zweiten Gasströmungskanalseitenwand zumindest teilweise parallel zu der ersten Richtung zu verlaufen,
derart, dass sich bei einer an den elektrischen Leiter (16) angelegten Spannung der elektrische Leiter (16) ein elektromagnetisches Feld ausbildet, wobei das elektromagnetisches Feld dafür vorgesehen ist, den Reaktant (15) zumindest teilweise in Richtung der Elektrode zu beschleunigen.

2. Bipolarplatte (10) nach Anspruch 1,
wobei der mindestens eine elektrische Leiter (16) eine Vielzahl von elektrischen Leitern ist.

3. Bipolarplatte (10) nach Anspruch 1 oder 2,
wobei der mindestens eine elektrische Leiter (16) ein Metall aufweist, insbesondere ausgewählt aus der Gruppe: Kupfer, Gold.

4. Bipolarplatte (10) nach Anspruch 1 oder 2,
wobei der mindestens eine elektrische Leiter (16) eine graphenbeschichtete Kohlefaser aufweist.

5. Bipolarplatte (10) nach Anspruch 1 oder 2,
wobei der mindestens eine elektrische Leiter (16) einen Hochtemperatur-Supraleiter aufweist.

6. Bipolarplatte (10) nach einem der Ansprüche 1 bis 5,
wobei der Bipolarplattenkörper (12) eine Keramik aufweist.

7. Bipolarplatte (10) nach einem der Ansprüche 1 bis 5,
wobei der Bipolarplattenkörper (12) einen kohlefaserverstärkten Kunststoff aufweist.

8. Bipolarplatte (10) nach einem der Ansprüche 1 bis 5,
wobei der Bipolarplattenkörper (12) einen kohlefaserverstärkten Kohlenstoff aufweist.

9. Brennstoffzelle, aufweisend eine Bipolarplatte (10) nach einem der Ansprüche 1 bis 8,
wobei die Brennstoffzelle (50) ferner eine Steuereinheit aufweist,
wobei die Steuereinheit dafür vorgesehen ist, den mindestens einen elektrischen Leiter (16) anzusteuern.

10. Brennstoffzelle nach Anspruch 9,
wobei die die Brennstoffzelle eingerichtet ist über eine erste Gasleitung mit einem kryogenem Wasserstoff enthaltenden Tank verbindbar zu sein, und
wobei der mindestens eine elektrische Leiter ein Hochtemperatur-Supraleiter ist,
und die Brennstoffzelle eingerichtet ist, mit der ersten Gasleitung derart in thermischer Wechselwirkung zu stehen,
dass eine durch den kryogenen Wasserstoff induzierte Wärmesenke in der ersten Gasleitung den Hochtemperatur-Supraleiter kühlt, und die Brennstoffzelle (10) den kryogenen Wasserstoff durch Aussetzen der ersten Gasleitung an die durch den Betrieb der Brennstoffzelle (10) entstehende Abwärme erwärmt.

11. Brennstoffzellenstapel (50), aufweisend eine Mehrzahl von Brennstoffzellen nach den Ansprüchen 9 oder 10.

12. Verfahren (100), insbesondere additives Fertigungsverfahren, zur Herstellung einer Bipolarplatte (10) nach einem der Ansprüche 1 bis 8, aufweisend die folgenden Schritte:
Bereitstellen (102) eines elektrischen Leiters (16), Bereitstellen (104) eines thermoplastischen Isolationswerkstoffs,
Ummanteln (106) des elektrischen Leiters (16) mit dem thermoplastischen Isolationswerkstoff mit einem Druckkopf, der dafür vorgesehen ist ein koaxiales Kabel herzustellen,
Ablegen (108) des koaxialen Kabels zu einem Bipolarplattenkörper (12), wobei der Bipolarplattenkörper (12) auf der ersten Oberfläche (13) mindestens einen Gasströmungskanal (14) aufweist,
derart, dass bei einer an den elektrischen Leiter (16) angelegten Spannung der elektrische Leiter (16) ein elektromagnetisches Feld ausbildet, wobei das elektromagnetisches Feld dafür vorgesehen ist, den Reaktant zumindest teilweise in Richtung der Elektrode zu beschleunigen.

13. Verfahren (100) nach Anspruch 12,
wobei der elektrische Leiter (16) eine Vielzahl von elektrischen Leitern umfasst.

14. Verfahren (200) zum Betreiben einer Brennstoffzelle (10) nach Anspruch 10, aufweisend die folgenden Schritte:
Vorsehen (202) einer Verbindung der Brennstoffzelle (10) mit einem kryogenem Wasserstoff enthaltenden Tank über eine erste Gasleitung,
Erwärmen (204) des kryogenen Wasserstoffs durch Aussetzen der ersten Gasleitung an die durch den Betrieb der Brennstoffzelle (10) entstehende Abwärme,
Kühlen (206) der Hochtemperatur-Supraleiter über eine durch den kryogenen Wasserstoff induzierte Wärmesenke,
derart, dass bei einer an den Hochtemperatur-Supraleiter angelegten Spannung der Hochtemperatur-Supraleiter ein elektromagnetisches Feld ausbildet, wobei das elektromagnetisches Feld dafür vorgesehen ist, den Reaktant zumindest teilweise in Richtung der Elektrode zu beschleunigen.

15. Luftfahrzeug (300), aufweisend eine Brennstoffzelle (10) nach einem der Ansprüche 9 oder 10.

## Claims

1. Bipolar plate (10) for a fuel cell for generating electrical current, comprising:
a bipolar plate body (12) with a first surface (13), the bipolar plate body (12) being set up to be in contact with an electrode via the first surface (13),
wherein the bipolar plate body (12) has at least one gas flow channel (14) on the first surface (13),
wherein the gas flow channel (14) defines a first gas flow channel sidewall and an opposing second gas flow channel sidewall, and
wherein the gas flow channel (14) extends along a first direction and is intended to bring a reactant (15) into contact with the electrode, and
at least one electrical conductor (16),
wherein the at least one electrical conductor (16) is designed to run at least partially parallel to the first direction within the bipolar plate body (12) behind the first gas flow channel side wall and/or the second gas flow channel side wall,
in such a way that when a voltage is applied to the electrical conductor (16), the electrical conductor (16) forms an electromagnetic field, the electromagnetic field being intended to at least partially accelerate the reactant (15) in the direction of the electrode.

2. Bipolar plate (10) according to claim 1,
wherein the at least one electrical conductor (16) is a plurality of electrical conductors.

3. Bipolar plate (10) according to claim 1 or 2,
wherein the at least one electrical conductor (16) has a metal, in particular selected from the group: copper, gold.

4. Bipolar plate (10) according to claim 1 or 2,
wherein the at least one electrical conductor (16) has a graphene-coated carbon fiber.

5. Bipolar plate (10) according to claim 1 or 2,
wherein the at least one electrical conductor (16) has a high-temperature superconductor.

6. Bipolar plate (10) according to one of claims 1 to 5,
wherein the bipolar plate body (12) has a ceramic.

7. Bipolar plate (10) according to one of claims 1 to 5,
wherein the bipolar plate body (12) has a carbon fiber-reinforced plastic.

8. Bipolar plate (10) according to one of claims 1 to 5,
wherein the bipolar plate body (12) has a carbon fiber-reinforced carbon.

9. Fuel cell, comprising a bipolar plate (10) according to one of claims 1 to 8,
wherein the fuel cell (50) further has a control unit,
wherein the control unit is intended to control the at least one electrical conductor (16).

10. Fuel cell according to claim 9,
wherein the fuel cell is set up to be connectable via a first gas line to a tank containing cryogenic hydrogen, and
wherein the at least one electrical conductor is a high-temperature superconductor, and the fuel cell is set up to be in thermal interaction with the first gas line in such a way,
that a heat sink induced by the cryogenic hydrogen in the first gas line cools the high-temperature superconductor, and the fuel cell (10) heats the cryogenic hydrogen by exposing the first gas line to the waste heat generated by the operation of the fuel cell (10).

11. Fuel cell stack (50), comprising a plurality of fuel cells according to claims 9 or 10.

12. Method (100), in particular additive manufacturing method, for producing a bipolar plate (10) according to one of claims 1 to 8, comprising the following steps:
providing (102) an electrical conductor (16),
providing (104) a thermoplastic insulation material,
sheathing (106) of the electrical conductor (16) with the thermoplastic insulation material with a print head which is intended to produce a coaxial cable,
laying down (108) the coaxial cable to a bipolar plate body (12), the bipolar plate body (12) having at least one gas flow channel (14) on the first surface (13),
such that when a voltage is applied to the electrical conductor (16), the electrical conductor (16) forms an electromagnetic field, the electromagnetic field being intended to at least partially accelerate the reactant in the direction of the electrode.

13. Method (100) according to claim 12,
wherein the electrical conductor (16) comprises a plurality of electrical conductors.

14. Method (200) for operating a fuel cell (10) according to claim 10, comprising the following steps:
providing (202) a connection of the fuel cell (10) to a tank containing cryogenic hydrogen via a first gas line,
heating (204) the cryogenic hydrogen by exposing the first gas line to the waste heat generated by the operation of the fuel cell (10),
cooling (206) of the high-temperature superconductors via a heat sink induced by the cryogenic hydrogen,
such that when a voltage is applied to the high-temperature superconductor, the high-temperature superconductor forms an electromagnetic field, the electromagnetic field being intended to at least partially accelerate the reactant in the direction of the electrode.

15. Aircraft (300), having a fuel cell (10) according to one of claims 9 or 10.

## Revendications

1. Plaque bipolaire (10) pour pile à combustible destinée à générer du courant électrique, comprenant :
un corps de plaque bipolaire (12) avec une première surface (13), le corps de plaque bipolaire (12) étant configuré pour être en contact avec une électrode via la première surface (13),
dans lequel le corps de plaque bipolaire (12) possède au moins un canal d'écoulement de gaz (14) sur la première surface (13),
dans lequel le canal d'écoulement de gaz (14) définit une première paroi latérale de canal d'écoulement de gaz et une seconde paroi latérale opposée de canal d'écoulement de gaz, et
dans lequel le canal d'écoulement gazeux (14) s'étend le long d'une première direction et est destiné à amener un réactif (15) en contact avec l'électrode, et
au moins un conducteur électrique (16),
dans lequel le au moins un conducteur électrique (16) est conçu pour s'étendre au moins partiellement parallèlement à la première direction à l'intérieur du corps de plaque bipolaire (12) derrière la première paroi latérale du canal d'écoulement de gaz et/ou la deuxième paroi latérale du canal d'écoulement de gaz,
de telle sorte que lorsqu'une tension est appliquée au conducteur électrique (16), le conducteur électrique (16) forme un champ électromagnétique, le champ électromagnétique étant destiné à accélérer au moins partiellement le réactif (15) en direction de l'électrode .

2. Plaque bipolaire (10) selon la revendication 1,
dans lequel le au moins un conducteur électrique (16) est une pluralité de conducteurs électriques.

3. Plaque bipolaire (10) selon la revendication 1 ou 2,
dans lequel le au moins un conducteur électrique (16) comporte un métal, notamment choisi dans le groupe : cuivre, or.

4. Plaque bipolaire (10) selon la revendication 1 ou 2,
dans lequel le au moins un conducteur électrique (16) possède une fibre de carbone recouverte de graphène.

5. Plaque bipolaire (10) selon la revendication 1 ou 2,
dans lequel le au moins un conducteur électrique (16) possède un supraconducteur à haute température.

6. Plaque bipolaire (10) selon l'une des revendications 1 à 5,
le corps de plaque bipolaire (12) étant constitué d'une céramique.

7. Plaque bipolaire (10) selon l'une des revendications 1 à 5,
le corps de plaque bipolaire (12) étant constitué d'un plastique renforcé de fibres de carbone.

8. Plaque bipolaire (10) selon l'une des revendications 1 à 5,
le corps de plaque bipolaire (12) étant constitué d'un carbone renforcé de fibres de carbone.

9. Pile à combustible, comprenant une plaque bipolaire (10) selon l'une des revendications 1 à 8,
dans lequel la pile à combustible (50) possède en outre une unité de commande,
l'unité de commande étant destinée à contrôler le ou les conducteurs électriques (16).

10. Pile à combustible selon la revendication 9,
dans lequel la pile à combustible est configurée pour pouvoir être connectée via une première conduite de gaz à un réservoir contenant de l'hydrogène cryogénique, et
dans lequel le au moins un conducteur électrique est un supraconducteur à haute température,
et la pile à combustible est agencée pour être en interaction thermique avec la première conduite de gaz de telle manière,
un puits de chaleur induit par l'hydrogène cryogénique dans la première conduite de gaz refroidit le supraconducteur à haute température, et la pile à combustible (10) chauffe l'hydrogène cryogénique en exposant la première conduite de gaz à la chaleur perdue générée par le fonctionnement de la pile à combustible (dix).

11. Pile à combustible (50), comprenant une pluralité de piles à combustible selon les revendications 9 ou 10.

12. Procédé (100), notamment procédé de fabrication additive, pour réaliser une plaque bipolaire (10) selon l'une des revendications 1 à 8, comprenant les étapes suivantes :
fournir (102) un conducteur électrique (16),
fournir (104) un matériau isolant thermoplastique,
gainage (106) du conducteur électrique (16) avec le matériau isolant thermoplastique avec une tête d'impression destinée à réaliser un câble coaxial,
poser (108) le câble coaxial sur un corps de plaque bipolaire (12), le corps de plaque bipolaire (12) comportant au moins un canal d'écoulement de gaz (14) sur la première surface (13),
de telle sorte que lorsqu'une tension est appliquée au conducteur électrique (16), le conducteur électrique (16) forme un champ électromagnétique, le champ électromagnétique étant destiné à accélérer au moins partiellement le réactif en direction de l'électrode.

13. Procédé (100) selon la revendication 12,
dans lequel le conducteur électrique (16) comprend une pluralité de conducteurs électriques.

14. Procédé (200) de fonctionnement d'une pile à combustible (10) selon la revendication 10, comprenant les étapes suivantes :
assurer (202) une connexion de la pile à combustible (10) à un réservoir contenant de l'hydrogène cryogénique via une première conduite de gaz,
chauffer (204) l'hydrogène cryogénique en exposant la première conduite de gaz à la chaleur perdue générée par le fonctionnement de la pile à combustible (10),
refroidissement (206) des supraconducteurs haute température via un dissipateur thermique induit par l'hydrogène cryogénique,
de telle sorte que lorsqu'une tension est appliquée au supraconducteur haute température, le supraconducteur haute température forme un champ électromagnétique, le champ électromagnétique étant destiné à accélérer au moins partiellement le réactif en direction de l'électrode.

15. Aéronef (300), comportant une pile à combustible (10) selon l'une des revendications 9 ou 10.
